# EUROPÄISCHE PATENTANMELDUNG

(11) **EP 0 682 459 A2**
(43) Veröffentlichungstag der Anmeldung: **15.11.1995**
(21) Anmeldenummer: 94117777.6
(22) Anmeldetag: 10.11.1994
(51) Int. Cl.: H04Q 11/04, H04M 11/06

(54) **Verfahren und Anordnung zur Datenübertragung**

(30) Priorität: 19.11.1993 DE 4339463
(71) Anmelder: SIEMENS AKTIENGESELLSCHAFT, D-80333 München (DE)
(72) Erfinder: Lipfert, Reinhard, D-47800 Krefeld (DE); Garweg, Kai, D-47137 Duisburg (DE)

(57) **Zusammenfassung**

Das erfindungsgemäße Verfahren ermöglicht eine einfache Ermittlung der Zeitversatzwerte zwischen den einzelnen Übertragungskanälen in einem mehrkanaligen Übertragungssystem (ISDN). Nach einer Initialisierung der Empfängerkanäle wird vom Sender eine Zahlenreihe auf allen Kanälen gleichzeitig gesendet. Wird beim Empfänger auf alle Kanäle ein vom Initialisierungswert unterschiedlicher Wert empfangen, so kann der relative Zeitversatz zwischen den Kanälen direkt aus den empfangenen Werten ermittelt werden.

## Beschreibung

Die Erfindung betrifft ein Verfahren und eine Anordnung zur Datenübertragung gemäß dem Oberbegriff des Anspruchs 1. Zur Datenfernübertragung wird üblicherweise mittels eines Modems über einen Datenkanal ein Datenaustausch zwischen zwei Datenstationen ermöglicht. Jedoch ist die Übertragungsrate bei derartigen Verfahren von der Bandbreite des Kanals abhängig.

In modernen Systemen wie z.B. dem ISDN kann einem Teilnehmer ein Anschluß mit einer Übertragungsrate von 64 kbit/s zur Verfügung gestellt werden. Ebenso sind sogenannte Primärmultiplexanschlüsse mit 30 derartigen Kanälen vorgesehen. Um die Übertragungsrate von 64 kbit/s zu erhöhen, kann z.B. das zu übertragende Datenpaket in einzelne Teildatenpakete aufgeteilt werden und über mehrere Kanäle gleichzeitig übertragen werden. So ist z.B. eine Übertragungsrate auf 30 Kanälen von bis zu 1920 kbit/s möglich.

Nachteil des oben beschriebenen Verfahrens ist es jedoch, daß die einzelnen Kanäle unterschiedliche Verzögerungszeiten in der Datenübertragung aufweisen, so daß die beim Empfänger ankommenden Teildatensignale zeitlich zueinander versetzt sind.

Aufgabe der vorliegenden Erfindung ist es ein Verfahren und eine Anordnung anzugeben, welches möglichst einfach eine Datenübertragung über eine Vielzahl von Kanälen ermöglicht.

Diese Aufgabe wird durch den kennzeichnenden Teil des Anspruchs 1 bzw. 2 gelöst.

Weiterbildungen sind in den Unteransprüchen gekennzeichnet.

Die Erfindung wird nachfolgend anhand zweier Figuren näher erläutert. Es zeigen:
- Figur 1: eine erfindungsgemäße Vorrichtung zur Durchführung des erfindungsgemäßen Verfahrens für eine Empfangsstation,
- Figur 2: eine Vorrichtung zur Durchfuhrung des Verfahrens in einer Sendestation,
- Figur 3: den Zeitablauf eines erfindungsgemäßen Synchronisationsverfahrens anhand von vier Übertragurigskanälen.

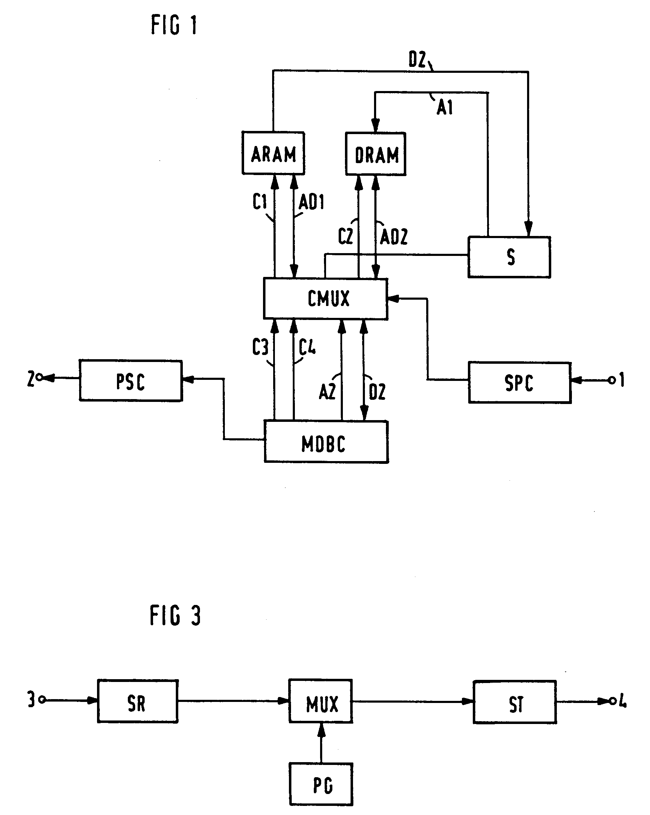

In Figur 1 ist mit 1 eine Eingangsklemme bezeichnet, der seriell Daten eines Übertragungskanals zugeführt werden. Der Übersichtlichkeit halber wurde auf die Darstellung weiterer Kanäle verzichtet. Diese wären bei einem System mit interner paralleler Datenübertragung parallel zu diesem Übertragskanal angeordnet. Bei einem Empfangs- bzw. Sendesystem mit interner serieller Übertragung werden die einzelnen Kanaldaten im Zeitmultiplexverfahren der Eingangsklemme 1 zugefuhrt wie in Figur 1 gezeigt. Die Eingangsklemme 1 ist mit dem Eingang eines Seriell-zu-Parallelwandlers SPC verbunden. Der Ausgang des Seriell-zu-Parallelwandlers SPC ist mit einem Eingang eines Steuermultiplexers CMUX verbunden. Die evtl. übrigen nicht dargestellten Kanäle können in gleicher Weise mit dem Steuermultiplexer CMUX verbunden. Der Multiplexer CMUX ist über eine Schreib/Leseleitung D3, eine Steuerleitung C4 sowie über Adreßleitungen A2 und Datenleitungen D2 mit einer Multikanalsteuereinrichtung MDBC verbunden. Die Multikanalsteuereinrichtung MDBC ist mit einem Parallel-zu-Seriell-Wandler PSC verbunden. Dieser ist mit einer Ausgangsklemme 2 verbunden, an der die seriellen Ausgangssignale abgreifbar sind. Es ist für parallel verarbeitende Empfänger wiederum nur ein Ausgangskanal aus Gründen der Übersichtlichkeit halber dargestellt. Der Multiplexer CMUX ist einerseits mit einem Adreß-RAM ARAM über Steuerleitungen C1 und Adreßdatenleitungen AD1 verbunden. Des weiteren ist ein Datenspeicher DRAM vorgesehen, der ebenfalls über eine Steuerleitung C2 und Adreßdatenleitungen AD2 mit dem Multiplexer verbunden ist. Schließlich ist eine Umschalteinheit S vorgesehen, die vom Multiplexer CMUX gesteuert wird. Die Umschalteinheit weist einen Eingang auf, der mit weiteren Datenleitungen D1 des Adreßspeichers ARAM verbunden ist und dessen Ausgang mit Adreßleitungen A1 verbunden ist, die zum Datenspeicher DRAM führen.

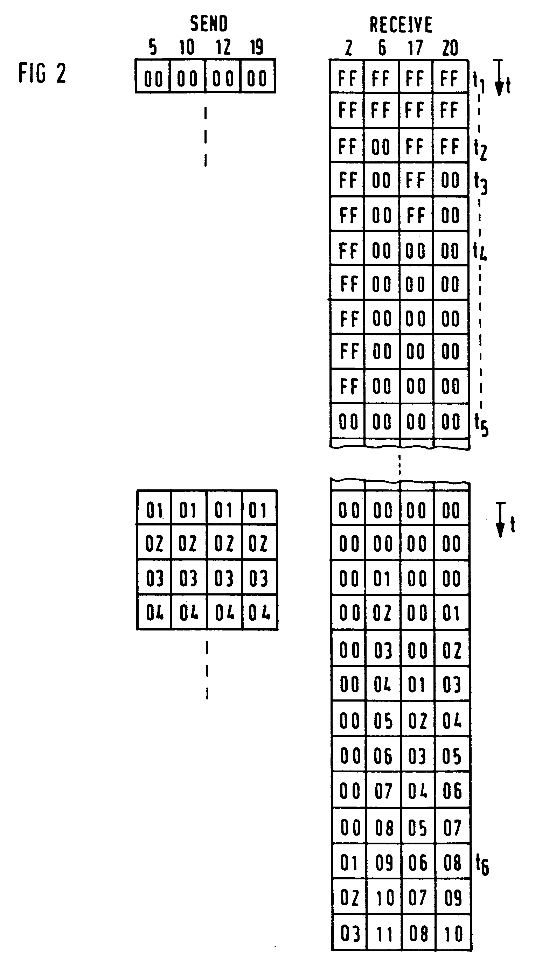

Figur 2 zeigt eine mögliche Ausgestaltung einer Einheit zur Durchführung der Initialisierung mit einem seriellen Empfangsbaustein SR, der über eine Eingangsklemme 3 mit seriellen Eingangsdaten gespeist wird und dessen Ausgang mit dem ersten Eingang eines Multiplexers MUX verbunden ist. Der zweite Eingang des Multiplexers MUX ist mit einer Mustererzeugungsschaltung PG verbunden. Der Ausgang des Multiplexers MUX ist mit einer seriellen Übertragungseinheit ST verbunden, deren Ausgang mit einer Ausgangsklemme 4 verschaltet ist, an der die seriellen Ausgangsdaten abgreifbar sind.

Das erfindungsgemäße Verfahren wird nachfolgend anhand von Figur 3 näher erläutert. In Figur 3 sind tabellarisch beispielsweise vier Sende- und vier Empfangskanäle dargestellt. Die vier Sendekanäle 5, 10, 12 und 19 sollen durch die Vermittlungsstation für eine parallele Datenübertragung ausgewählt worden sein. Die Übertragung über die einzelnen Sendekanäle 5, 10, 12, 19 soll dann zu den Empfangskanälen 2, 6, 17 und 20 im Empfänger erfolgen. Dabei sind die Laufzeiten der einzelnen Kanäle unterschiedlich und nicht bekannt, jedoch während der gesamten Übertragung, während der diese Kanäle ausgewählt wurden, konstant.

Zur Initialisierung sendet der Sender auf allen Kanälen z.B. das Datenwort "00". Es sei angenommen, daß in den Empfangskanälen zu diesem Zeitpunkt beliebige Werte oder z.B. die Werte FF(HEX) stehen. Da die Laufzeit in den verschiedenen Übertragungskanälen unterschiedlich ist, ist im oberen rechten Teil der Figur 2 zu sehen, daß zu unterschiedlichen Zeitpunkten die vom Sender gesendeten Initialisierungswerte empfangen werden. Dabei ist im oberen rechten Teil von Figur 2 die Zeitachse von oben nach unten verlaufend festgelegt. Zum Zeitpunkt t₂ empfängt Kanal 6 das von Kanal 10 gesendete Initialisierungswort. Zum Zeitpunkt t₃ empfängt es Kanal 20, zum Zeitpunkt t₄ Kanal 17 und zum Zeitpunkt T₅ Kanal 2. Zum Zeitpunkt t₅ sind alle Kanäle auf den Initialisierungswert gesetzt und die Empfangsstation kann aus diesen Daten z.B. den absoluten Zeitversatz bis zum Empfang des Initialisierungswortes durch den Kanal, dessen Übertragungszeit am kürzesten ist, ermitteln. Im zweiten Schritt erfolgt die Messung des relativen Zeitversatzes zwischen den einzelnen Kanälen. Dazu sendet die Sendestation beginnend bei einem beliebigen Startwert z.B. 01 eine fortlaufende Zahlenfolge über alle Kanäle. Dies ist im unteren Teil von Figur 2 dargestellt. So werden auf allen Sendekanälen gleichzeitig die Zahlenfolge 01, 02, 03, usw. gesendet. Der Startwert und die Folgewerte sollten unterschiedlich vom zuvor im ersten Schritt gesendeten Initialisierungswert sein, da der Empfänger dann zu dem Zeitpunkt, da alle Kanäle unterschiedliche Werte im Vergleich zum Initialisierungswert aufweisen, den relativen Zeitversatz zwischen den einzelnen Empfangskanälen ermitteln kann. Im dargestellten Beispiel tritt dies zum Zeitpunkt t₆ ein. Vom Zeitpunkt t₆ an bleibt der relative Zeitversatz zwischen den einzelnen Kanälen konstant, solange die Verbindung aufgebaut bleibt. Aus den Differenzwerten kann nun die Bmpfangsstation den relativen Zeitversatz ermitteln und mittels einer in Figur 1 dargestellten Anordnung die einzelnen Teilübertragungen wieder in der richtigen Reihenfolge ausgeben, so daß das vom Sender gesendete Datenpaket wieder seine ursprüngliche Form erlangt.

Die in Figur 2 dargestellte Mustererzeugungseinheit PG dient während der Initialisierungsphase dazu, die Zahlenfolge an die Übertragungskanäle auszugeben. Die Zahlenfolge muß nicht zwangsweise die oben dargestellte Reihe aufweisen, sie könnte z.B. auch anders ausgebildet sein. Der Multiplexer gemäß Figur 2 dient dazu während der Initialisierungsphase diese gewünschte Zahlenfolge über die selektierten Übertragungskanäle zu senden. Im Normalbetrieb wird er dann wieder auf die serielle Empfangseinheit SR, die von der sendenden Datenstation gespeist wird, umgeschaltet.

Die Empfangsstation kann zur Ermittlung des Zeitversatzes eine Anordnung gemäß Figur 1 aufweisen. Hierzu können z.B. die gemäß Figur 2 ermittelten Zeitversatzwerte, die sich direkt aus der Differenz der in den einzelnen Kanälen zum Zeitpunkt t₆ empfangenen Werte ergibt, in den Adressenspeicher ARAM abgespeichert werden. Während des Einlesens der Daten der Kanäle werden diese vom Multiplexer abgefragt und sequentiell, d.h. so wie sie empfangen wurden, über die Steuerleitung C2 und die Adreßdatenleitung AD2 im Datenspeicher DRAM gespeichert. Die Multikanalsteuereinheit MDBC steuert diesen Vorgang. Der Datenspeicher DRAM kann z.B. als Ringspeicher ausgebildet sein und muß eine Größe aufweisen, die mindestens so viel Datenwerte des Senders aufnehmen kann, daß sowohl der absolute, wie auch der relative Zeitversatz bei der Datenübertragung aufgefangen wird. Die Multikanalsteuereinheit MDBC dient auch dazu den Datenspeicher DRAM wieder auszulesen, jedoch nun so, daß am Ausgang 2 die Daten in der richtigen Reihenfolge ausgegeben werden. Hierzu wird über die Schalteinheit S die Adressierung des Datenspeichers DRAM gesteuert. Dabei wird der Adressenspeicher ebenso wie der Datenspeicher sequentiell angesteuert, jedoch werden durch den Adressenspeicher ARAM die Adressen in die zuvor ermittelten Versatzadressen umgewandelt und über die Schalteinheit an den Datenspeicher DRAM angelegt. Der Datenspeicher gibt dann über seine Datenleitung AD2 den zeitlich richtigen Wert an den Multiplexer CMUX und die Multikanalsteuereinheit MDBC aus und diese kann auf diese Weise die auf den einzelnen Empfangskanälen empfangenen Teildatenübertragungen wieder in der richtigen Reihenfolge über die Anschlußklemme 2 ausgeben.

Anstelle der in Figur 1 dargestellten Einheit kann selbstverständlich auch ein Prozessor treten, der die Daten mittels Software wieder anhand der emittelten Zeitversatzwerte in die gewünschte Reihenfolge bringt.

## Patentansprüche

1. Verfahren zur Datenübertragung in einem n-Übertragungskanäle aufweisenden System mit einer Sende- und einer Empfangsstation, wobei zur Datenübertragung m-Kanäle (n≧m>0) verwendet werden und über jeden der m-Kanäle eine Datenteilübertragung erfolgt,
**dadurch gekennzeichnet**, daß während einer Initialisierungsphase die Empfangsstation den Zeitversatz auf den einzelnen Übertragungskanälen dadurch ermittelt, daß
- von der Sendestation ein vorbestimmter Startwert auf allen Kanälen gleichzeitig übertragen wird,
- wenn alle Kanäle in der Empfangsstation den vorbestimmten Startwert empfangen haben, die Empfangsstation ein Bestätigungssignal über wenigstens einen der Kanäle an die Sendestation sendet,
- die Sendestation nach Empfangen des Bestätigungssignals auf allen Kanälen beginnend bei einem vorbestimmten Wert eine Zahlenfolge sendet,
- die Empfangsstation nachdem auf allen Kanälen ein von dem vorbestimmten Startwert unterschiedlicher Wert empfangen wurde, aus dem relativen Versatz der in den einzelnen Kanälen empfangenen Datenwerte den Zeitversatz zwischen den einzelnen Kanälen ermittelt und für die nachfolgende Datenübertragung berücksichtigt.

2. Anordnung zur Durchführung eines Verfahrens nach Anspruch 1,
**dadurch gekennzeichnet,** daß
- die Empfangsstation einen Adressenspeicher (ARAM) und einen Datenspeicher (DRAM) und Steuermittel (MDBC, CMUX) aufweist,
- die ermittelten Zeitversatzwerte im Adresspeicher gespeichert werden um so Versatzadressen zu bilden,
- die empfangenen Daten in den Datenspeicher (DRAM) sequentiell unter Steuerung der Steuermittel abgespeichert werden,
- unter Steuerung der Steuermittel der Datenspeicher über die im Adresspeicher gespeicherten Versatzadressen adressiert und ausgelesen werden,
- die Steuermittel die gelesenen Daten einem Ausgangskanal zuordnen.

3. Anordnung zur Durchführung eines Verfahrens nach Anspruch 1 oder 2,
**dadurch gekennzeichnet,** daß die Sendestation eine Mustererzeugungsschaltung (PG) zur Erzeugung der Zahlenfolge enthält.
